# FASCICULE DE BREVET EUROPEEN

(11) **EP 0 679 550 B1**
(45) Date de publication et mention de la délivrance du brevet: **02.06.1999**
(21) Numéro de dépôt: 95400973.4
(22) Date de dépôt: 28.04.1995
(51) Int. Cl.: B60N 2/02, B60N 2/20, B60N 2/36, B60N 2/48

(54) **Siège transformable, notamment pour véhicule automobile**
Verwandelbarer Kraftfahrzeugsitz
Convertible seat, especially for motor vehicle

(30) Priorité: 29.04.1994 FR 9405221
(43) Date de publication de la demande: 02.11.1995
(73) Titulaire: RENAULT, 92109 Boulogne-Billancourt (FR)
(72) Inventeur: Gergen, Stefan, F-92100 Boulogne (FR); Matthews, Ian, F-75018 Paris (FR)

(56) Documents cités:
- EP-A- 0 022 691
- DE-A- 3 222 274
- FR-A- 1 499 448
- FR-A- 2 691 681
- GB-A- 2 220 981
- US-A- 4 268 086
- US-A- 4 606 577

## Description

L'invention concerne un siège de véhicule automobile du type comportant un dossier rabattable, réglable en inclinaison et une assise également rabattable. L'invention concerne plus particulièrement un tel siège dans lequel le dessous de l'assise peut constituer une partie d'un plan de chargement du véhicule.

La polyvalence des véhicules a abouti à la réalisation de sièges qui permettent, par rabattement du dossier et par basculement vers l'avant de l'assise ou de l'ensemble du siège, de faire évoluer le volume de chargement en fonction des besoins, en créant un plan parallèle au plancher de charge. Cette configuration n'est pas obtenue sur un siège avant muni d'un dossier rabattable classique.

La publication FR-A-2 693 156 (correspondant au préambule de la revendication indépendante) décrit un siège avant, qui permet l'extension de la zone de chargement jusqu'au tableau de bord par rabattement du dossier sur l'assise autour d'un axe déporté vers le haut, ce qui permet ainsi de placer le dos du dossier parallèlement au plancher de charge.

Cependant l'utilisation de la partie arrière du dossier du siège avant ne permet pas la création d'une continuité du plancher de charge, mais permet uniquement de réaliser un complément d'espace de chargement sur un niveau différent. La différence de niveau peut être gênante pour la stabilité du chargement et pour le rangement d'objets encombrants, en particulier en longueur.

De plus, un tel siège ne permet pas le réglage en inclinaison du dossier pour obtenir un bon confort pour le dos, en raison de la position de l'axe de pivotement dudit dossier. En effet lors d'une inclinaison éventuelle du dossier, la continuité d'appui sur toute la région dorsale ne peut pas être assurée correctement, car la partie fixe portant l'axe provoque une discontinuité de l'appui et par conséquent une position inconfortable.

Par ailleurs, le basculement du dossier du siège avant sur l'assise nécessite une translation préliminaire dudit siège vers l'arrière afin de ne pas être gêné par la planche de bord lors de la manoeuvre de rabattement.

Enfin, l'utilisation de la partie arrière du dossier de siège comme plan de charge, nécessite un habillage constitué en générale d'une tôle peinte ou d'autres matériaux résistants, ce qui est le plus souvent utilisé aux places arrière pour des raisons esthétiques.

L'autre antériorité US-A-4 268 086 décrit un siège transformable qui comporte un dossier réglable en inclinaison et rabattable vers l'avant sur une assise pui est montée à pivotement au niveau de sa partie avant, autour d'un axe porté par le plancher, ce qui autorise le basculement vers l'avant.

Afin de remédier aux inconvénients mentionnés ci-dessus, l'invention a pour objet un siège qui a la possibilité de se transformer, en particulier aux places avant, sans obligation de déplacer le siège en translation et de manière à pouvoir libérer toute la longueur de l'habitacle.

L'invention a également pour objet un siège qui permet à la face inférieure de l'assise d'être positionnée dans le prolongement du plan définissant le plancher de charge après retournement dudit siège autour d'un axe transversal.

L'invention a pour objet entre autres, de garder le confort d'un siège classique, et de ne pas avoir de limitations d'ordre esthétique pour les parties visibles par les passagers, telles que les faces arrière des dossiers de sièges.

Selon l'invention le siège possède un dossier en liaison avec l'assise par l'intermédiaire d'un axe d'inclinaison qui porte latéralement un premier ensemble de ferrure qui s'étend en direction de la base du dossier et qui comporte un axe de basculement dudit dossier et un second ensemble de ferrure qui s'étend en direction de l'assise et qui comporte un axe de pivotement de ladite assise et les trois axes coopérant mutuellement en un ensemble d'articulation de l'assise et du dossier sont munis de moyens indépendants d'immobilisation des mouvements de pivotement relatifs de l'assise et du dossier autour desdits axes.

Selon une autre caractéristique de l'invention lesdits moyens indépendants sont actionnés par des leviers de commande respectivement de basculement de l'assise, de basculement du dossier, d'inclinaison du dossier.

Selon une autre caractéristique de l'invention le levier de commande de basculement est positionné sur l'assise, que les leviers de commande de basculement et d'inclinaison sont regroupés sur le dossier et que les trois leviers sont localisés d'un même coté dudit siège.

Selon une autre caractéristique de l'invention le moyen d'immobilisation de l'assise est constitué d'un indexage angulaire de l'assise par rapport au support disposé perpendiculairement à l'axe de pivotement et deux verrous latéraux d'assise localisé à l'avant de ladite assise qui coopérent avec le support.

Selon une autre caractéristique de l'invention le dossier est monté sur des montants latéraux constitués chacun de deux tubes conformés en glissières et qui coopèrent avec des guides latéraux support d'un appuie-tête.

Selon une autre caractéristique de l'invention une plaque rigide est montée à coulissement dans l'assise entre des renforts structurels et un habillage de dessous d'assise.

D'autres caractéristiques et avantages de l'invention apparaîtront à la lecture de la description d'exemples de réalisation d'un siège en référence au dessin annexé dans lequel :
- la figure 1 représente une vue perspective d'un siège selon l'invention en position dite normale.
- la figure 2 représente une vue en coupe partielle longitudinale des moyens de verrouillage du basculement et de l'inclinaison du dossier.
- la figure 3 représente une vue en élévation latérale du moyen de verrouillage de l'inclinaison du dossier.
- la figure 4 représente une coupe partielle du dossier suivant 4-4 de la figure 3.
- la figure 5 représente une vue en coupe partielle longitudinale des moyens d'immobilisation de l'assise.
- la figure 6 représente une vue en élévation latérale du moyen d'indexage angulaire de l'assise.
- la figure 7 représente une vue en élévation latérale, d'un agencement du siège selon l'invention en position dite utilitaire.

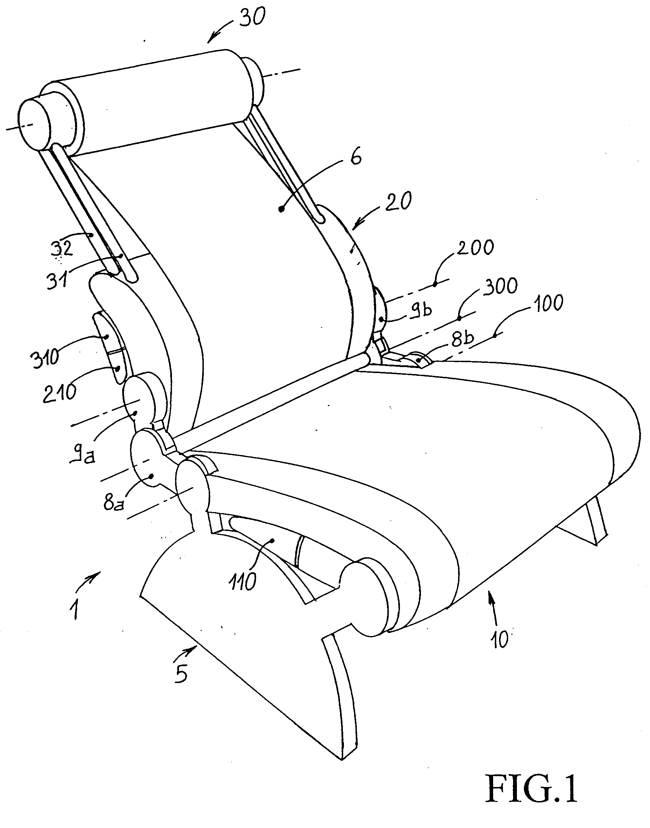

En se rapportant à la figure 1, le siège 1 comporte une assise 10, un dossier 20 ajustable par rapport à ladite assise 10, un support 5 de siège et un appuie-tête 30 guidé dans le dossier 20. Le siège 1 possède un axe de pivotement 100, de basculement 200 et d'inclinaison 300, disposés transversalement. Ces axes 100, 200, 300 permettent de realiser une liaison entre le dossier 20 et l'assise 10 et coopèrent mutuellement en un ensemble d'articulation de ladite assise 10 et dudit dossier 20. Les trois axes de pivotement 100, de basculement 200 et d'inclinaison 300 sont munis de moyens indépendants 130, 250, 350 d'immobilisation des mouvements de pivotement relatifs de l'assise 10 et du dossier 20 autour desdits axes 100, 200, 300 actionnés par des leviers de commande 110, 210, 310 respectivement de basculement de l'assise 10, de basculement du dossier 20, d'inclinaison du dossier 20.

Par convention les pièces qui sont en relation avec un des axes 100, 200 et 300 seront repérées dans la centaine correspondante.

Les axes 100, 200 et 300 sont portés par des ferrures latérales 8a, 8b, 9a et 9b de la façon suivante:
- Un premier ensemble de ferrures 8a et 8b s'étend en direction de l'assise et comporte l'axe 100 de pivotement de l'assise 10 et l'axe 300 d'inclinaison du dossier 20.
- Un second ensemble de ferrures 9a et 9b s'étend en direction de la base du dossier et est monté à pivotement autour de l'axe 300 d'inclinaison dudit dossier 20 et qui porte l'axe 200 de basculement dudit dossier 20.

L'axe 300 est apparent transversalement au-dessus de l'habillage du siège 1 et peut avoir une fonction de tension d'une nappe 6 de recouvrement de l'assise 10 et du dossier 20.

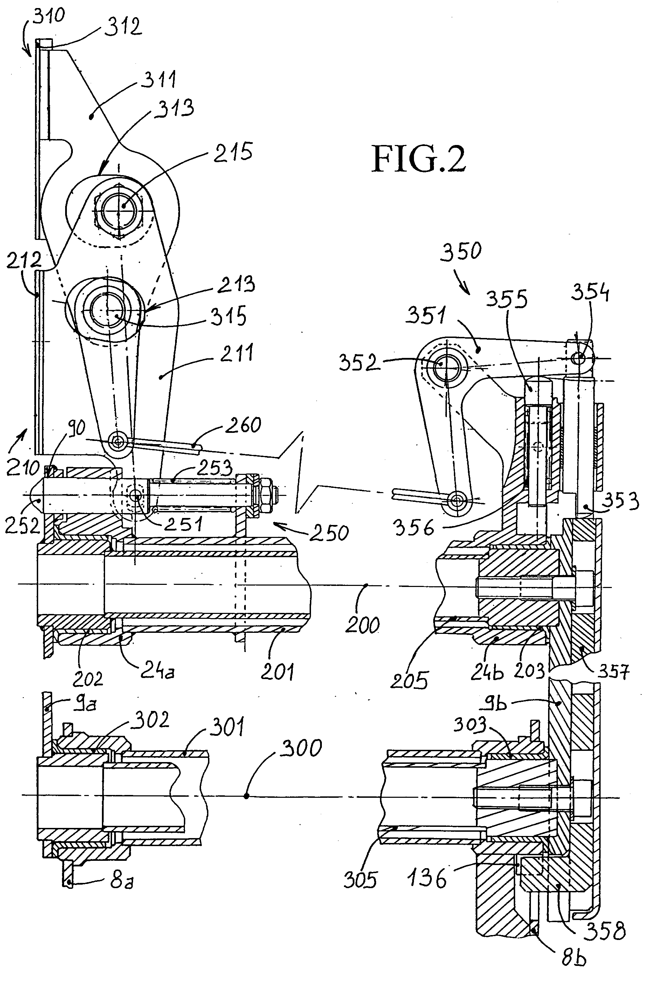

En se rapportant à la figure 2, les ferrures 9a et 9b sont munies d'entretoises tubulaires 205 et 305 respectivement coaxiales aux axes 200 et 300. L'entretoise 205 comporte à ses extrémités des portées cylindriques 202 et 203. L'entretoise 305 comporte à ses extrémités des portées cylindriques 302 et 303.

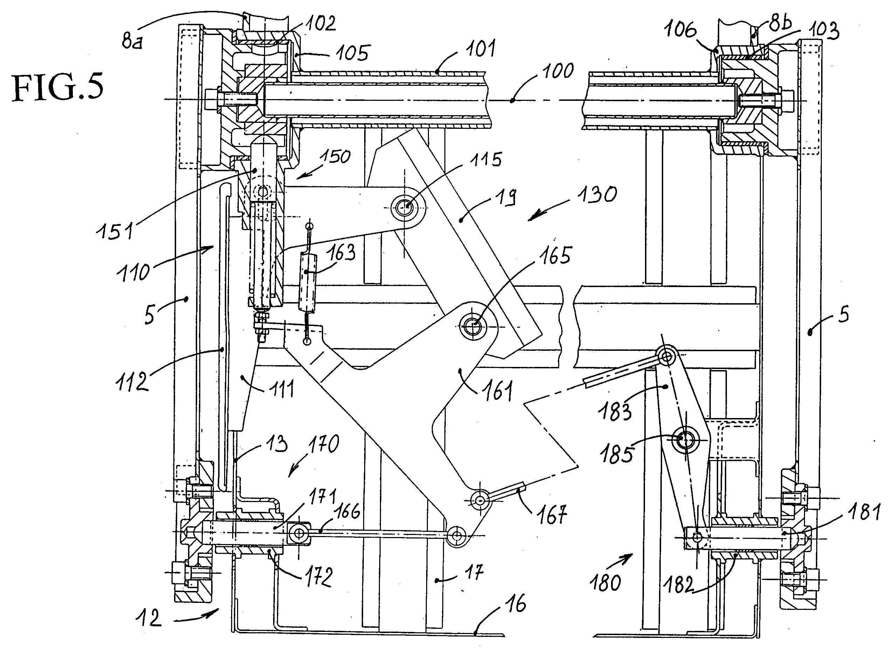

En se rapportant aux figures 2 et 5, les ferrures 8a et 8b sont munies d'entretoises tubulaires 301 et 101 respectivement coaxiales aux axes 300 et 100. L'entretoise 301 coopère par ses extrémités avec les portées cylindriques 302 et 303. L'entretoise 101 coopère avec des portées cylindriques 102 et 103 respectivement localisées sur des extrémités 105 et 106 de ladite entretoise 101.

En se rapportant aux figures 2, 3 et 4, le dossier 20 du siège 1 est composé d'un coussin 26 de dossier, d'un habillage 27 de l'arrière du dossier 20 et d'une structure qui comporte des montants latéraux constitués chacun de deux tubes 21 et 22, situés dans un plan perpendiculaire à l'axe de basculement 200, et liés à leurs extrémités par des brides inférieures 24a et 24b et supérieure 25.

Les tubes 22 situés dans la partie arrière du dossier 20 sont reliés entre eux par une paroi de fermeture 23. Les brides inférieures 24a et 24b sont reliées entre elles par une entretoise tubulaire 201 et coopèrent avec les portées cylindriques 202 et 203 d'axe 200.

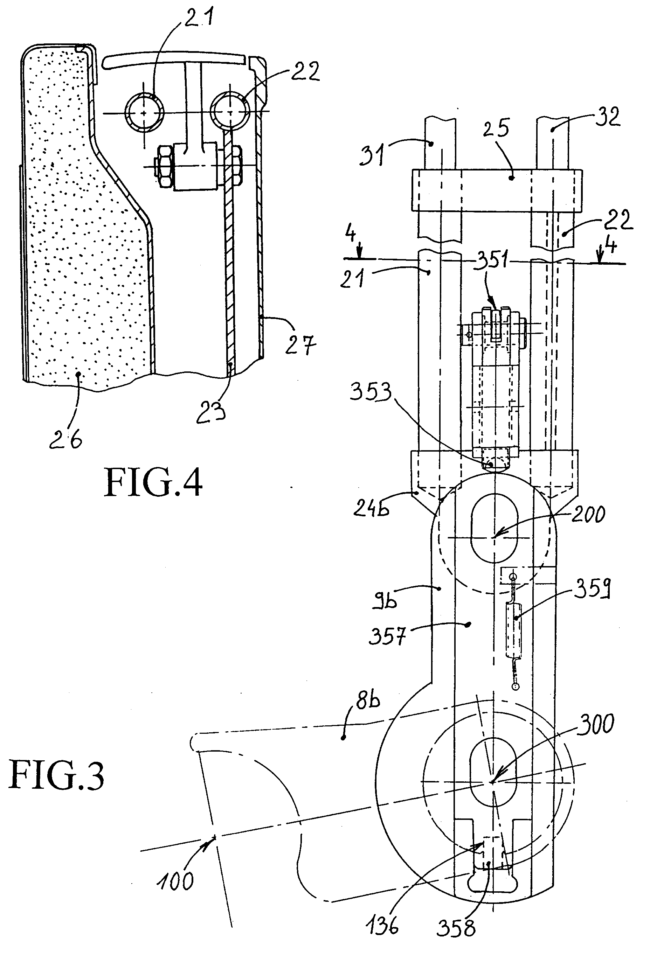

En se rapportant aux figures 1 et 3, un appuie-tête 30 est porté par des guides latéraux 31 et 32 montés à coulissement dans les montants latéraux du dossier et dans lesquels les deux tubes 21 et 22 sont conformés en glissières. Lesdits guides 31 et 32 sont maintenus en position dans les glissières par des moyens de verrouillage non représentés.

En se rapportant à la figure 2, la paroi de fermeture 23 supporte les leviers de commandes 210 et 310 et les moyens 250 et 350 d'immobilisation du dossier 20. Les leviers de commandes 210 et 310 sont constitués chacun d'une cornière respectivement 211 et 311 garnie d'un habillage respectivement 212 et 312 sur la paroi destinée à être poussée et porteuse d'un axe respectivement 215 et 315 de pivotement sur l'autre paroi. Les habillages 212 et 312 des leviers de commande 210 et 310 définissent une surface continue lorsque lesdits leviers ne sont pas actionnés. Les parois porteuses des axes de pivotement sont ajourées par des lumières 213 et 313, afin de permettre le passage de l'axe de pivotement 215 et 315 ou d'un déport de commande du levier voisin, ceci sans que les leviers 210 et 310 se gênent mutuellement lors de leurs utilisations.

Le basculement du dossier 20 vers l'avant est effectué par l'actionnement du levier de commande 210 monté à rotation, par une de ses extrémités, autour de l'axe 215 fixé perpendiculairement à la paroi de fermeture 23 et qui coopère, par l'intermédiaire d'une goupille 251 fixée à l'autre extrémité dudit levier 210, avec un doigt de verrouillage 252 monté à translation dans la bride inférieure 24a, de façon à extraire ledit doigt 252 d'un orifice de positionnement 90 réalisé dans la ferrure 9a, lors de ladite action. En fin de course de basculement, le doigt de verrouillage 252 se positionne automatiquement, par l'action d'un ressort de rappel 253, dans un orifice 91 non représenté réalisé dans la ferrure 9a et qui immobilise ainsi le dossier 20 dans une position définie.

Pour permettre le retour du dossier 20 dans sa position d'utilisation normale, la même action est effectuée sur le levier de commande 210 tout en basculant ledit dossier 20 vers l'arrière.

L'inclinaison du dossier 20 vers l'avant ou vers l'arrière afin d'obtenir une position plus confortable, est effectuée par l'actionnement d'un levier de commande 310 monté à rotation sensiblement en son milieu, autour d'un axe 315 fixé perpendiculairement à la paroi de fermeture 23.

Ce levier de commande 310 active un palonnier 351 par l'intermédiaire d'une tige 260 montée à articulation à une extrémité dudit levier 310 et à une extrémité dudit palonnier 351. Le palonnier 351 est monté à pivotement autour d'un axe 352 parallèle à l'axe 315 de rotation du levier de commande 310 et porté par la bride inférieure 24b. Le palonnier 351 coopère par une de ses extrémités avec un poussoir 353, en liaison avec ce dernier par l'intermédiaire d'une goupille 354 et monté à coulissement dans la bride inférieure 24b suivant une direction perpendiculaire à l'axe 200 de basculement du dossier 20.

Le retour du palonnier 351 en position initiale est effectué par l'intermédiaire d'une butée 355 montée à coulissement dans la bride 24b parallèlement au poussoir 353 et pourvue d'un ressort de rappel 356.

En se rapportant aux figures 2 et 3, le poussoir 353 commande un verrou 357 monté à coulissement dans la ferrure latérale 9b, qui coopère par son extrémité inférieure pourvue d'un ergot de verrouillage 358 avec des crans 136 localisés sur la ferrure 8b liée à l'assise 10. Un ressort de rappel 359 est lié au verrou 357 par une de ses extrémités et à la ferrure 9b par l'autre extrémité, ce qui produit un effort de réaction qui conserve ledit verrou 357 en position verrouillage lorsque aucune action contraire n'est produite par le poussoir 353.

Afin de ne pas gêner le mouvement de basculement du dossier 20 autour de l'axe 200, l'extrémité supérieure du verrou 357 a la forme d'un arc de cercle décrit par l'extrémité du poussoir 353 lors de ladite action de basculement.

Lors du déverrouillage de l'axe d'inclinaison 300 du dossier 20, un ressort de rappel non représenté produit un effort faisant pivoter le dossier 20 vers la position verticale.

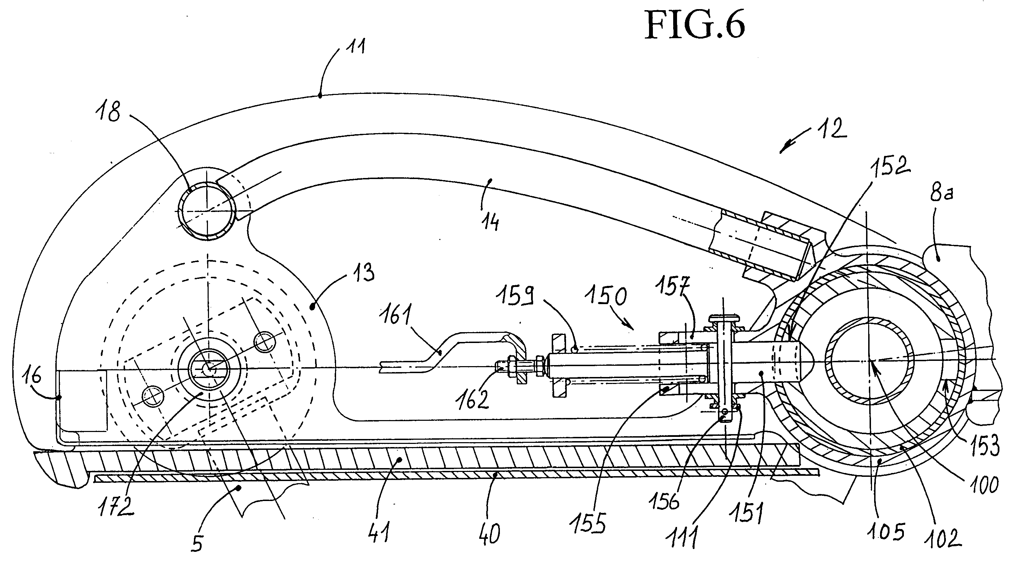

En se rapportant aux figures 5 et 6, l'assise 10 du siège est composée d'un coussin d'assise 11, d'un cadre 12 qui comporte des flancs latéraux 13 porteurs chacun d'un arceau tubulaire 14 de rigidification des parties latérales dudit coussin d'assise 11. Les flancs 13 sont reliés transversalement entre eux, à l'avant par une entretoise tubulaire 18 et par une paroi de fermeture 16, et au niveau de la partie arrière de l'assise 10 par l'entretoise tubulaire 101. Des renforts structurels 17 sont répartis dans la partie inférieure de l'assise 10. L'assise 10 du siège est montée à pivotement autour de l'axe 100 porté par le support 5 de siège et coopérant avec les extrémités 105 et 106 de l'entretoise tubulaire 101 par l'intermédiaire des portées cylindriques 102 et 103.

Un moyen d'immobilisation 130 constitué d'un indexage angulaire 150 et de deux verrous latéraux d'assise 170 et 180 permet de maintenir en position normale d'utilisation le cadre 12 de l'assise 10. L'indexage angulaire 150 conformé en un doigt de verrouillage 151 est disposé perpendiculairement à l'axe 100 et coopère avec un perçage 152 aménagé dans le support 5. Les verrous latéraux d'assise 170 et 180 sont disposés coaxialement entre eux et transversalement à l'assise 10, coopérant avec le support 5 sur des faces opposées, et qui permettent l'immobilisation de l'assise 10 en position normale d'utilisation. Les verrous latéraux d'assise 170 et 180 ont la forme de doigts de verrouillage 171 et 181 montés à coulissement dans des éléments de guidage 172 et 182 portés par les flancs latéraux 13 du cadre 12 de l'assise 10.

Lors du retournement de l'assise 10 autour de l'axe 100, le doigt 151 coopère avec un perçage 153 aménagé dans le support 5 afin d'immobiliser l'assise 10 en position retournée.

Un levier de commande 110, conformé en une cornière 111 garnie d'un habillage 112 sur la paroi destinée à être poussée et porteuse d'un axe de pivotement 115 sur l'autre paroi, permet d'actionner simultanément l'indexage 150 et les verrous latéraux d'assise 170 et 180. Le levier de commande 110 est monté à pivotement autour de l'axe 115 perpendiculaire à un plan fictif défini par l'assise 10 et porté par un renfort structurel 19.

Le doigt 151 qui constitue le moyen d'indexage est monté à coulissement dans une protubérance 155 localisée sur l'extrémité 105 de l'entretoise tubulaire 101. Le doigt 151 porte radialement un axe de commande 156 guidé dans une lumière 157 ne permettant audit doigt 151 aucun mouvement de pivotement autour de son axe. L'axe de commande 156 coopère avec le levier 111.

Lors d'une action de poussée sur le levier 111, ce dernier pivote autour de son axe 115 et provoque ainsi la translation du doigt d'indexage 151 par l'intermédiaire de l'axe de commande 156. Un ressort de rappel 159 monté sur le doigt 151 permet le retour en position de ce dernier ainsi que du levier 111 lorsque aucune action sur celui-ci est effectuée.

Un palonnier 161 monté à pivotement autour d'un axe 165 parallèle à l'axe 115 et porté par un renfort structurel 19, coopère par une de ses extrémités avec le doigt d'indexage 151 par l'interposition entre eux d'une butée réglable 162. La butée 162 et le doigt 151 sont maintenus en contact par un effort de rappel produit par un ressort 163 liant le palonnier 161 à une partie du levier de commande 111.

Le palonnier 161 porte à une extrémité deux tiges 166 et 167 montées à articulation. La tige 166 est montée à articulation par son extrémité libre sur le doigt de verrouillage 171. La tige 167 est montée à articulation par son extrémité libre à un palonnier de renvoi 183 monté à pivotement autour d'un axe 185, qui coopère par une extrémité opposée avec le second doigt de verrouillage 181.

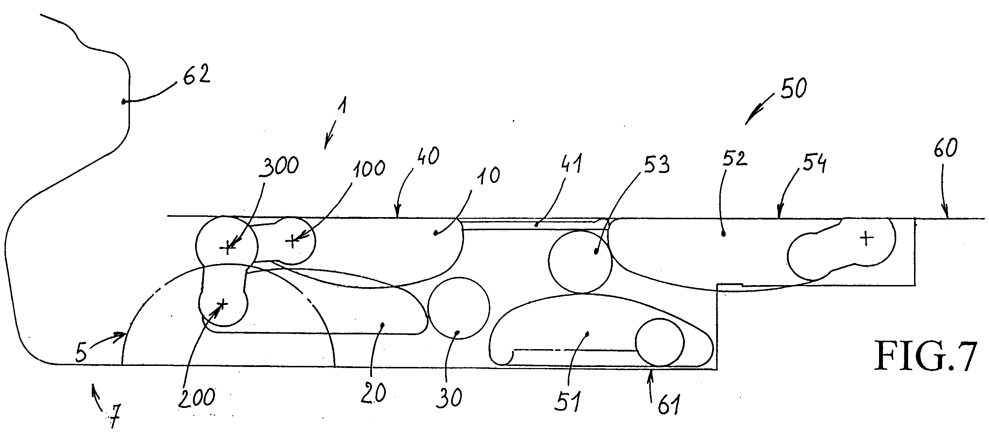

En se rapportant aux figures 1 et 7, le siège 1 à la possibilité d'être transformé de façon à libérer de l'espace pour le chargement d'un véhicule 7 composé d'un plancher de charge 60, d'un plancher 61, d'une planche de bord 62. La transformation consiste à faire basculer le dossier 20 sur l'assise 10 autour de l'axe de basculement 200, puis de faire pivoter vers l'arrière d'un angle de 180°, l'ensemble assise 10 et dossier 20 autour de l'axe de pivotement 100.

Une banquette arrière 50 composée d'un dossier rabattable 52, d'un appuie-tête 53 et d'une assise 51 est transformée d'une façon connue en soi afin de permettre le positionnement de la partie arrière 54 du dossier 52 dans le prolongement du plancher de charge 60. Après avoir rabattu le dossier 52, l'appuie-tête 53 repose sur l'assise 51 de la banquette 50 déposé sur le plancher 61 du véhicule.

Une plaque rigide 41 est montée à coulissement dans l'assise 10 entre les renforts structurels 17 et l'habillage 40 de dessous d'assise, telle que représentée à la figure 6. Lors du retournement de l'ensemble assise 10 et dossier 20, la plaque 41 est translatée de façon à reposer sur l'appuie-tête 53 de la banquette arrière 50 en position rabattue. La plaque 41 limite ainsi les contraintes appliquées sur le doigt d'indexage 151 et permet la continuité du plan de charge 60 entre la partie arrière 54 du dossier de la banquette 50 et l'habillage 40 du dessous de l'assise du siège avant 1.

Cette transformation permet de prolonger la surface de chargement sans risque de détérioration des sièges. Pour effectuer la transformation l'utilisateur actionne les différents leviers précédemment décrits.

## Revendications

1. Siège de véhicule automobile du type comportant un dossier (20) inclinable et rabattable vers l'avant et une assise (10) basculable vers l'arrière fixée sur un support (5), caractérisé par le fait que le dossier (20) est en liaison avec l'assise (10) par l'intermédiaire d'un axe (300) d'inclinaison qui porte latéralement un premier ensemble de ferrure (9a, 9b) qui s'étend en direction de la base du dossier (20) et qui comporte un axe (200) de basculement dudit dossier et un second ensemble de ferrure (8a, 8b) qui s'étend en direction de l'assise (10) et qui comporte un axe (100) de pivotement de ladite assise et que les trois axes (100, 200, 300) coopérant mutuellement en un ensemble d'articulation de l'assise (10) et du dossier (20) sont munis de moyens indépendants (130, 250, 350) d'immobilisation des mouvements de pivotements relatifs de l'assise (10) et du dossier (20) autour desdits (100, 200, 300).

2. Siège selon la revendication 1, caractérisé par le fait que lesdits moyens indépendants (130, 250, 350) sont actionnés par des leviers de commande (110, 210, 310) respectivement de basculement de l'assise (10), de basculement du dossier (20), d'inclinaison du dossier (20).

3. Siège selon la revendication 2, caractérisé par le fait que le levier de commande de basculement (110) est positionné sur l'assise (10), que les leviers de commande de basculement (210) et d'inclinaison (310) sont regroupés sur le dossier (20) et que les trois leviers sont localisés d'un même coté dudit siège (1).

4. Siège selon l'une quelconques des revendications 2 ou 3, caractérisé par le fait que le moyen d'immobilisation (130) de l'assise (10) est constitué d'un indexage angulaire (150) de l'assise (10) par rapport au support (5) disposé perpendiculairement à l'axe (100) de pivotement et deux verrous latéraux d'assise (170, 180) localisé à l'avant de ladite assise (10) qui coopérent avec le support (5).

5. Siège selon l'une quelconque des revendications 1 à 4, caractérisé par le fait que le dossier (20) est monté sur des montants latéraux constitués chacun de deux tubes (21, 22) conformés en glissières et qui coopèrent avec des guides latéraux (31, 32) support d'un appuie-tête (30).

6. Siège selon l'une quelconque des revendications 1 à 5, caractérisé par le fait qu'une plaque rigide (41) est montée à coulissement dans l'assise (10) entre des renforts structurels (17) et un habillage (40) de dessous d'assise.

## Claims

1. Seat for an automotive vehicle of the type comprising a reclinable back rest (20) which can be folded forwards, and a seat squab (10) which can be tipped towards the rear, fixed by a support (5), characterised by the fact that the back rest (20) is connected to the seat squab (10) by means of an axle (300) for reclining, which carries laterally a first set of fittings (9a, 9b) which extends in the direction of the base of the back rest (20) and which comprises an axle (200) for tipping said back rest, and a second set of fittings (8a, 8b) which extends in the direction of the seat squab (100) and which comprises an axle (100) for pivoting said seat squab, and that the three axles (100, 200, 300) mutually cooperating as an assembly for articulating the seat squab (10) and the back rest (20) are provided with independent means (130, 250, 350) for stopping the relative pivoting movements of the seat squab (10) and of the back rest (20) about said axles (100, 200, 300).

2. Seat according to claim 1, characterised by the fact that said independent means (130, 250, 350) are actuated by control levers (110, 210, 310) respectively for tipping the seat squab (10), for tipping the back rest (20), and for reclining the back rest (20).

3. Seat according to claim 2, characterised by the fact that the lever for controlling tipping (110) is positioned on the seat squab (10), that the levers for controlling tipping (210) and reclining (310) are assembled on the back rest (20), and that the three levers are sited on the same side of said seat (1).

4. Seat according to any one of claims 2 or 3, characterised by the fact that the means (130) for immobilising the seat squab (10) is constituted by angular indexing (150) of the seat squab (10) with respect to the support (5) arranged perpendicularly to the pivoting axle (100) and two lateral seat squab latches (170, 180) sited at the front of said seat squab (10), which cooperate with the support (5).

5. Seat according to any one of claims 1 to 4, characterised by the fact that the back rest (20) is mounted on lateral mountings, each constituted by two tubes (21, 22) configured as slides and which cooperate with lateral supporting guides (31, 32) of a head rest (30).

6. Seat according to any one of claims 1 to 5, characterised by the fact that a rigid plate (41) is mounted in a sliding manner in the seat squab (10) between structural reinforcements (17) and a trim (40) for the underneath of the seat squab.

## Patentansprüche

1. Sitz für ein Automobil mit einer Rückenlehne (20), die neigbar und nach vorne hin umklappbar ist, und einer auf einem Träger (5) befestigten nach hinten kippbaren Sitzfläche (10), dadurch gekennzeichnet, daß die Rückenlehne (20) mit der Sitzfläche (10) mittels einer Neigungsachse (300) verbunden ist, die seitlich eine erste Armaturengruppe (9a, 9b) trägt, die sich in der Richtung der Basis der Rückenlehne (20) erstreckt und die eine Kippachse (200) der Rückenlehne und eine zweite Armaturengruppe (8a, 8b) aufweist, die sich in der Richtung der Sitzfläche (10) erstreckt und die eine Schwenkachse (100) der Sitzfläche aufweist, und daß die drei Achsen (100, 200, 300), die miteinander in einer Gelenkgruppe der Sitzfläche (10) und der Rückenlehne (20) zusammenwirken, mit unabhängigen Mitteln (130, 250, 350) zum Feststellen der relativen Drehbewegungen der Sitzfläche (10) und der Rückenlehne (20) um die Achsen (100, 200, 300) ausgestattet sind.

2. Sitz nach Anspruch 1, dadurch gekennzeichnet, daß die unabhängigen Mittel (130, 250, 350) durch jeweilige Stellhebel (110, 210, 310) zum Kippen der Sitzfläche (10), zum Kippen der Rückenlehne (20) und zum Neigen der Rückenlehne (20) betätigt werden.

3. Sitz nach Anspruch 2, dadurch gekennzeichnet, daß der Kipp-Stellhebel (110) auf der Sitzfläche (10) angeordnet ist, daß die Kipp- und Neigungs-Stellhebel (210, 310) auf der Rückenlehne (20) angeordnet sind und daß sich die drei Hebel auf derselben Seite des Sitzes (1) befinden.

4. Sitz nach einem der Ansprüche 2 oder 3, dadurch gekennzeichnet, daß das Mittel zum Feststellen (130) der Sitzfläche (10) aus einer Winkelverriegelung (150) der Sitzfläche (10) bezüglich des Trägers (5), der senkrecht zur Schwenkachse (100) angeordnet ist, und aus zwei im vorderen Bereich der Sitzfläche (10) angeordneten seitlichen Sitzflächenbolzen, die mit dem Träger (5) zusammenwirken, besteht.

5. Sitz nach einem der Ansprüche 1 bis 4, dadurch gekennzeichnet, daß die Rückenlehrte (20) auf seitlichen Ständern montiert ist, die jeweils aus zwei aus Gleitschienen gebildeten Rohren (21, 22) bestehen und die mit seitlichen Führungen (31, 32) als Halter für eine Kopfstütze (30) zusammenwirken.

6. Sitz nach einem der Ansprüche 1 bis 5, dadurch gekennzeichnet, daß eine starre Platte (41) in der Sitzfläche (10) zwischen Strukturverstärkungen (17) und einer Verkleidung (40) der Sitzflächenunterseite gleitend gelagert ist.
